# EUROPEAN PATENT SPECIFICATION

(11) **EP 3 930 966 B1**
(45) Date of publication and mention of the grant of the patent: **03.04.2024**
(21) Application number: 20763319.9
(22) Date of filing: 24.02.2020
(51) Int. Cl.: B25J 9/16, B25J 19/00, B25J 19/02, B25J 11/00, A47L 9/28

(54) **MOBILE ROBOT AND CONTROL METHOD THEREOF**
MOBILER ROBOTER UND STEUERUNGSVERFAHREN DAFÜR
ROBOT MOBILE ET SON PROCÉDÉ DE COMMANDE

(30) Priority: 25.02.2019 KR 20190022061
(43) Date of publication of application: 05.01.2022
(73) Proprietor: LG Electronics Inc., Seoul 07336 (KR)
(72) Inventor: KIM, Hyunsung, Seoul 08592 (KR); PARK, Sangyeol, Seoul 08592 (KR)
(74) Representative: Vossius & Partner Patentanwälte Rechtsanwälte mbB
(86) International application number: PCT/KR2020/002628
(87) International publication number: WO 2020/175872

(56) References cited:
- EP-A1- 2 921 095
- JP-A- 2004 021 774
- JP-A- 2017 158 934
- JP-A- 2017 158 934
- JP-B2- 3 006 986
- KR-A- 20180 084 305
- KR-B1- 101 306 501

## Description

### Technical Field

The present disclosure relates to technology for controlling a mobile robot.

### Background Art

Robots have been developed for industrial purposes, to take charge of a part of factory automation. Recently, application fields of robots have been further expanded and, as such, medical robots, aerospace robots, etc. have been developed. In addition, domestic robots usable in general homes have been manufactured. Among such robots, an autonomous robot is referred to as a "mobile robot". A representative example of mobile robots used in homes is a robot cleaner.

Various technologies for sensing an environment surrounding a mobile robot and a user through various sensors provided at the mobile robot are known. In addition, technologies for enabling a mobile robot to perform mapping through learning of a travel area by itself, and to identify a current position on a map are known.

Technologies of realizing a mobile robot to execute a certain task such as cleaning are known. During execution of a certain task, such a mobile robot generates noise. In connection with this, various noise cancelling or noise reduction devices to reduce generation of noise are known.

A patent document mentioned below discloses a cleaner which receives a control a time period from an input device, to limit an output of a driver when a current time belongs to the control time period, for reduction of noise, and, as such, performs traveling and cleaning in a low-noise mode in a time period in which the user does not want to be disturbed.

In the patent document, however, there is inconvenience in that the user should set a time period for a disturbance prohibition mode. Furthermore, there may be a problem in that, even in the time period for the disturbance prohibition mode, there may be a time in which general cleaning is possible because the user does not go to bed or is out.

In addition, there may be a drawback in that, when the cleaner executes cleaning in a low-noise mode and a general mode simply on a time basis, general cleaning is carried out when the user desires the disturbance prohibition mode or low-noise cleaning is carried out when the user desires general cleaning because the current situation of the user and a surrounding environment are not taken into consideration, and, as such, desired cleaning may not be executed.

Furthermore, there may be a problem in that, when the cleaner performs recharging of a battery thereof due to an insufficiently charged state of the battery occurring during cleaning, the surrounding environment and situation in an initial stage of recharging may be varied after recharging and, as such, cleaning after recharging may become a disturbance factor to the user.

### [Related Document]

### [Patent Document]

Japanese Unexamined Patent Publication No. 2006-164100, JP 2017158934 A1 and EP 2921095 A1 are related prior art documents

### [Disclosure]

### [Technical Problem]

Therefore, the present disclosure has been made in view of the above problems, and it is an object of the present disclosure to reduce various disturbance factors of a mobile robot, such as noise, light, and vibration, to the user.

In a specific situation in which the user performs a predetermined task or is asleep, the above-described disturbance factors of the mobile robot may cause the user great discomfort. In this case, the user may involve a manual action or the like to reduce an output of the mobile robot or to turn off driving of the mobile robot. This may also cause inconvenience. Therefore, another object of the present disclosure is to solve such problems.

Anther object of the present disclosure is to determine whether or not a disturbance prohibition mode should be executed, taking into consideration a variation in illumination between an initial stage when the user commands execution of cleaning and a stage when recharging is completed and whether or not the user is present, thereby achieving an enhancement in user convenience while reducing various disturbance factors to the user.

### Solution to Problem

The present disclosure discloses a mobile robot and a control method thereof which are characterized by comparing an illumination in an initial stage of a cleaning task with an illumination at a time when recharging of a battery is completed, and comparing the illumination after recharging of the battery with a reference illumination value, thereby determining whether or not the cleaning task should be subsequently executed.

In detail, in accordance with an aspect of the present disclosure, the above and other objects can be accomplished by the provision of a control method of a mobile robot including first illumination value measurement of, by the mobile robot, measuring a first illumination value in a travel area in which the mobile robot travels, and executing a first task for the travel area, recharging of, by the mobile robot, stopping the first task and performing recharging when a charged amount of a battery is insufficient in a state in which the mobile robot incompletely executes the first task for the travel area, second illumination value measurement of, by the mobile robot, measuring a second illumination value in the travel area after the mobile robot completes recharging, and task execution determination of, by the mobile robot, comparing the second illumination value with a predetermined reference illumination value and the first illumination value, thereby subsequently executing the first task or determining no subsequent execution of the first task.

In the task execution determination, the mobile robot may subsequently execute the first task when the second illumination value is greater than the reference illumination value.

In the task execution determination, the mobile robot may not subsequently execute the first task when the second illumination value is smaller than the reference illumination value, and a difference between the second illumination value and the first illumination value is greater than a predetermined reference difference value.

In the task execution determination, the mobile robot may subsequently execute the first task when the second illumination value is smaller than the reference illumination value, and a difference between the second illumination value and the first illumination value is smaller than a predetermined reference difference value.

In the task execution determination, the mobile robot may return to a recharging station when the mobile robot does not subsequently execute the first task.

A point at which the first illumination value is measured and a point at which the second illumination value is measure may be the same.

The control method may further include determination of determining whether or not there is a person in the travel area. In this case, in the task execution determination, the mobile robot may subsequently execute the first task when the second illumination value is smaller than the reference illumination value, a difference between the second illumination value and the first illumination value is greater than a predetermined reference difference value, and there is no person in the travel area.

The control method may further include determination of determining whether or not there is a person in the travel area. In this case, in the task execution determination, the mobile robot may not subsequently execute the first task when the second illumination value is smaller than the reference illumination value, a difference between the second illumination value and the first illumination value is greater than a predetermined reference difference value, and there is a person in the travel area.

In the determination, the mobile robot may analyze an image of surroundings of the mobile robot, thereby determining whether or not there is a person in the travel area.

In the determination, the mobile robot may analyze an operation state of an electronic appliance connected to the mobile robot in a wired or wireless communication manner, thereby determining whether or not there is a person in the travel area.

In accordance with another aspect of the present disclosure, there is provided a mobile robot including a driver configured to move a body, a task executer configured to execute a predetermined task, n image sensor configured to acquire an image of surroundings of the body, and a controller configured to compare a first illumination value measured in an initial stage of a first task, a second illumination value measured after stopping the first task and then completing recharging, and a predetermined reference illumination value, thereby controlling the mobile robot to subsequently execute the first task or not to subsequently execute the first task.

The controller may analyze the surrounding image of the body, thereby determining whether or not there is a person in a travel area, and may control the mobile robot to subsequently execute the first task or not to subsequently execute the first task in accordance with whether or not there is a person in the travel area.

The mobile robot may further include a communicator configured to communicate with an electronic appliance. In this case, the controller may analyze an operation state of the electronic appliance received through the communicator, thereby determining whether or not there is a person in a travel area, and may control the mobile robot to subsequently execute the first task or not to subsequently execute the first task in accordance with whether or not there is a person in the travel area.

The controller may control the mobile robot not to subsequently execute the first task when the second illumination value is smaller than the reference illumination value, and a difference between the second illumination value and the first illumination value is greater than a predetermined reference difference value.

The controller may control the mobile robot not to subsequent execute the first task when the second illumination value is smaller than the first reference illumination value, a difference between the second illumination value and the first illumination value is greater than a predetermined reference difference value, and there is a person in the travel area.

### Advantageous Effects of Invention

Through the above-described technical solutions, an effect of reducing discomfort of the user caused by the above-described disturbance factors generated by the mobile robot during execution of a task is obtained.

The present disclosure has an effect of eliminating discomfort of the user or executing a task, taking into consideration a situation around the mobile robot, without setting of details such as a time for a disturbance prohibition mode.

In addition, when recharging is carried out due to power shortage of the battery during execution of a task, a long time may elapse from an initial stage in which a cleaning command is input. In the present disclosure, accordingly, whether discomfort of the user should be reduced or whether cleaning is subsequently executed is determined, taking into account various factors. Accordingly, there is an effect of efficiently reducing discomfort of the user in an environment varied from that of the initial stage of cleaning.

Furthermore, in the present disclosure, factors to manually change a mode of the mobile robot by the user are reduced. Accordingly, there is an effect of enabling the user to further concentrate upon an action conducted thereby such as sleeping, rest, reading, etc. in a desired time.

### Brief Description of Drawings

The above and other objects, features and other advantages of the present disclosure will be more clearly understood from the following detailed description taken in conjunction with the accompanying drawings, in which:
FIG. 1 is a perspective view illustrating a mobile robot 100 according to an embodiment of the present disclosure and a recharging station 200 configured to recharge the mobile robot 100;
FIG. 2 is a top view of the mobile robot 100 in FIG. 1;
FIG. 3 is a front view of the mobile robot 100 in FIG. 1;
FIG. 4 is a bottom view of the mobile robot 100 in FIG. 1;
FIG. 5 is a block diagram illustrating control relations among essential configurations of the mobile robot 100 in FIG. 1;
FIG. 6 is a concept diagram illustrating a network between the mobile robot of FIG. 1 and a terminal 300;
FIG. 7 is a concept diagram illustrating an example of the network of FIG. 6;
FIG. 8 is a flowchart illustrating a control method of the mobile robot according to an embodiment of the present invention; and
FIG. 9 is a flowchart illustrating a control method of the mobile robot according to another embodiment of the present invention.

### Best Mode for Carrying out the Invention

Advantages and features of the present disclosure and methods of accomplishing the same may be understood more readily by reference to the following detailed description of the exemplary embodiments and the accompanying drawings. However, the present disclosure may be embodied in many different forms and should not be construed as limited to the embodiments set forth herein. Rather, these embodiments are provided so that this disclosure will be thorough and complete, and will fully convey the scope of the disclosure to those skilled in the art. The present disclosure is defined only by the categories of the claims. In certain embodiments, detailed descriptions of device constructions or processes well known in the art may be omitted to avoid obscuring appreciation of the disclosure by a person of ordinary skill in the art. Wherever possible, the same reference numbers will be used throughout the drawings to refer to the same or like parts.

Spatially-relative terms such as "below", "beneath", "lower", "above", or "upper" may be used herein to describe one element's relationship to another element as illustrated in the Figures. It will be understood that spatially-relative terms are intended to encompass different orientations of the device in addition to the orientation depicted in the Figures. For example, if the device in one of the figures is turned over, elements described as "below" or "beneath" other elements would then be oriented "above" the other elements. The exemplary terms "below" or "beneath" can, therefore, encompass both an orientation of above and below. Since the device may be oriented in another direction, the spatially-relative terms may be interpreted in accordance with the orientation of the device.

The terminology used in the present disclosure is for the purpose of describing particular embodiments only and is not intended to limit the disclosure. As used in the disclosure and the appended claims, the singular forms are intended to include the plural forms as well, unless context clearly indicates otherwise. It will be further understood that the terms "comprises" and/or "comprising," when used in this specification, specify the presence of stated constituent elements, steps, and/or operations, but do not preclude the presence or addition of one or more other constituent elements, steps, and/or operations.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, the thickness or size of each constituent element is exaggerated, omitted, or schematically illustrated for convenience in description and clarity. In addition, the size or area of each constituent element does not entirely reflect the actual size or area thereof.

Hereinafter, embodiments of the present disclosure will be described in detail with reference to the accompanying drawings.

A mobile robot 100 of the present disclosure means a robot movable by itself using wheels or the like. The mobile robot 100 may be a domestic assistant robot, a robot cleaner or the like.

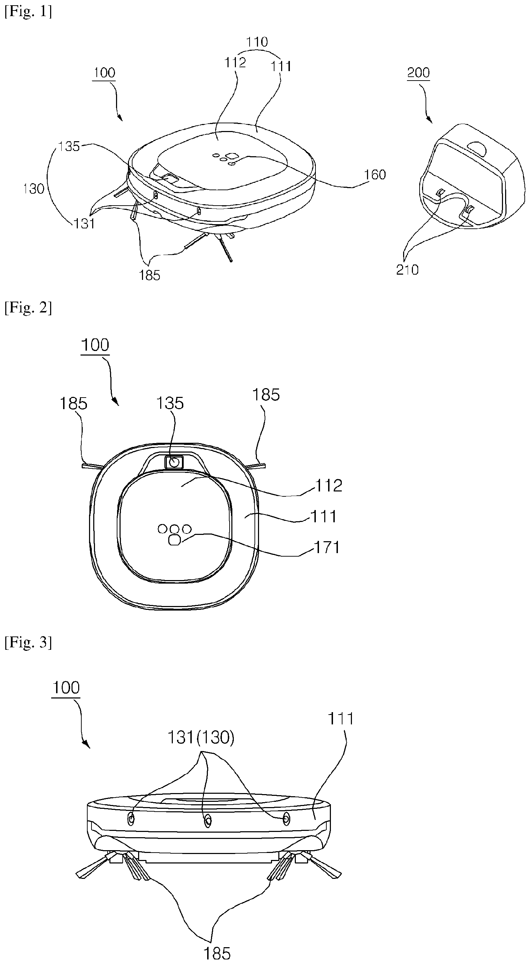

The following description will be given in conjunction with an example in which the mobile robot 100 is a robot cleaner, with reference to FIGS. 1 to 5, but the present disclosure is not limited thereto.

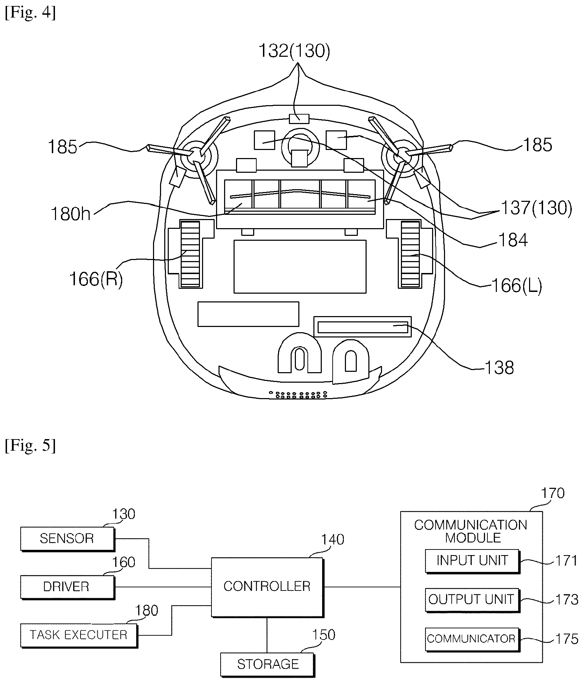

The mobile robot 100 includes a body 110. In conjunction with definition of each portion of the body 110 in the following description, a portion of the body 110 directed to a ceiling in a travel area is defined as a top portion (cf. FIG. 2), a portion of the body 110 directed to a floor in the travel area is a bottom portion (cf. FIG. 4), and a portion of the body 110 directed to a travel direction while being included in a portion of the body 110 constituting a periphery of the body 110 is defined as a front portion (cf. FIG. 3). In addition, a portion of the body 110 directed to a direction opposite to the front portion of the body 110 may be defined as a rear portion. The body 110 may include a case 111 forming a space in which various elements constituting the mobile robot 100 are received.

The mobile robot 100 includes a sensor 130 configured to sense information as to surroundings of the mobile robot 100.

The sensor 130 may sense information as to a travel area. The sensor 130 may sense obstacles such as a wall, furniture, a precipice, etc. on a travel surface. The sensor 130 may sense information as to a ceiling. The sensor 130 may sense an article laid on the travel surface. Through information sensed by the sensor 130, the mobile robot 100 may map the travel area.

The sensor 130 may include an image sensor 135 configured to sense (acquire) a surrounding image. The image sensor 135 photographs the travel area, and may include a digital camera. The digital camera may include at least one optical lens, an image sensor (for example, a complementary metal oxide semiconductor (CMOS) image sensor) including a plurality of photodiodes (for example, pixels), on which light passing through the optical lens is focused, and a digital signal processor (DSP) configured to compose an image based on signals output from the photodiodes. The digital signal processor may produce not only a still image, but also a video image constituted by frames respectively constituted by still images.

The sensor 130 may include a distance sensor 131 configured to sense a distance to an obstacle. The distance sensor 131 may be disposed at the front portion of the body 110. The distance sensor 131 may sense a front obstacle. A plurality of distance sensors 131 may be provided. The distance sensor 131 may be embodied using ultrasonic waves or infrared light. The distance sensor 131 may be embodied using a camera.

The sensor 130 may include a precipice sensor 132 configured to sense whether or not there is a precipice on the floor in the travel area. A plurality of precipice sensors 132 may be provided.

In addition, the sensor 130 may include an illumination sensor (not shown) configured to sense illumination (brightness level) of the travel area. A plurality of precipice sensors 132 may be provided.

The sensor 130 may further include a bottom image sensor 137 configured to acquire a floor image.

The mobile robot 100 includes a driver 160 configured to move the body 110. The driver 160 moves the body 110 on the floor. The driver 160 may include at least one driving wheel 166 to move the body 110. The driver 160 may include a driving motor. Driving wheels 166 may be provided at left and right sides of the body 110, respectively. In the following description, these driving wheels 166 are referred to as a "left wheel 166(L)" and a "right wheel 166(R)", respectively.

The left wheel 166(L) and the right wheel 166(R) may be driven by a single driving motor. However, if necessary, a left wheel driving motor to drive the left wheel 166(L) and a right wheel driving motor to drive the right wheel 166(R) may be independently provided. A travel direction of the body 110 may be changed to the left or the right by varying rotation speeds of the left wheel 166(L) and the right wheel 166(R) such that the rotation speeds differ from each other.

The mobile robot 100 includes a task executer 180 configured to execute a predetermined task. The task executer 180 may execute the predetermined task while generating noise. For example, upon rotating a brush for sweeping, noise is generated. Upon operating a suction motor for vacuum suction, noise is generated.

For example, the task executer 180 may be provided to execute household tasks such as cleaning (sweeping, suction cleaning, wiping, etc.), dishwashing, cooking, laundering, waste disposal, etc. In another example, the task executer 180 may be provided to execute a task such as manufacture or repair of a mechanism. In another example, the task executer 180 may execute tasks such as article search and insect control.

In another example, the task executer 180 may execute a security function of sensing an invader from the surroundings or a dangerous situation. The task executer 180 may include a camera configured to execute such a security function. In this case, the image sensor 135 may execute a camera function for execution of the security function.

In the following description, the present embodiment is described in conjunction with the case in which the task executer 180 executes a cleaning task. However, there may be various kinds of tasks of the task executer 180 without being limited to the examples illustrated in the present disclosure.

The mobile robot 100 may clean the floor by the task executer 180 while moving in the travel area. The task executer 180 may include a sucker configured to suck foreign matter, brushes 184 and 185 configured to execute sweeping, a dust box (not shown) to store foreign matter collected by the sucker or the brushes, and/or a wiper (not shown) configured to execute wiping, and the like.

A suction port 180h, through which suction of air is carried out, may be formed at the bottom portion of the body 110. The body 110 may be provided with a sucker (not shown) configured to provide suction force, for suction of air through the suction port 180h, and a dust box (not shown) configured to collect dust sucked through the suction port 180h together with air.

The case 111 may be formed with an opening for insertion and separation of the dust box. A dust box cover 112 for opening or closing the opening may be provided such that the dust box cover 112 is pivotable with respect to the case 111.

A roll type main brush 184 having brushes exposed through the suction port 180h and an auxiliary brush 185 having brushes constituted by a plurality of radially-extending wings may be provided. Through rotation of the brushes 184 and 185, dust is removed from the floor in the travel area. Dust separated from the floor as described above is sucked through the suction port 180h, and is then collected in the dust box.

Batteries 177 and 138 may supply electric power required not only for the driving motors, but also for overall operation of the mobile robot 100.

The battery 177 is configured to be rechargeable. The battery 177 may be recharged through docking of the mobile robot 100 with a recharging station 200 and connection between a charging terminal 210 and a corresponding terminal 190. When a charged amount of the battery 177 is not higher than a predetermined value, the mobile robot 100 may execute travel to return to the recharging station 200, for recharging thereof. During such return travel, the mobile robot 100 may detect a position of the recharging station 200 by itself.

The recharging station 200 may include a signal transmitter (not shown) configured to transmit a predetermined return signal. The return signal may be an ultrasonic signal or an infrared signal, but is not limited thereto.

The mobile robot 100 includes a communication module 170 configured to receive an input of information or to receive information. The communication module 170 may output or transmit information. The communication module 170 may include a communicator 175 configured to perform transmission and reception of information with other external appliances. The communication module 170 may include an input unit 171 configured to input information. The communication module 170 may include an output unit 173 configured to output information.

For example, the mobile robot 100 may directly receive information from the input unit 171. In another example, the mobile robot 100 may receive information input to a separate terminal 300 via the communicator 175.

For example, the mobile robot 100 may directly output information to the output unit 173. In another example, the mobile robot 100 may transmit information to the separate terminal 300 via the communicator 175 such that the terminal 300 may output the information.

The input unit 171 may receive ON/OFF commands or various other commands. The input unit 171 may include a button, a key, a touch type display, etc. The input unit 171 may include a microphone for voice recognition. Although not shown, information as to whether or not a disturbance prohibition mode, which will be described later, is activated, information as to setting of the disturbance prohibition mode, information as to whether or not a specific function, which will be described later, is activated, and/or various information as to setting of the specific function may be received through the input unit 171.

The output unit 173 may inform the user of various information. The output unit 173 may include a speaker and/or a display.

The communicator 175 may be connected to a terminal device and/or another electronic appliance disposed in a specific area through one of wired, wireless and satellite communication systems and, as such, may perform data transmission and reception.

The communicator 175 may be configured to communicate with other electronic appliances 300, 310, and 320 including the terminal 300, an access point 400, and/or a server 500. The communicator 175 may communicate with other appliances disposed in a specific area. The communicator 175 may communicate with the access point 400. The communicator 175 may communicate with the mobile terminal 300. The communicator 175 may communicate with the server 500.

The communicator 175 may receive various command signals from external appliances such as the terminal 300. The communicator 175 may transmit information to be output to external appliances such as the terminal 300. The terminal 300 may output information received from the communicator 175.

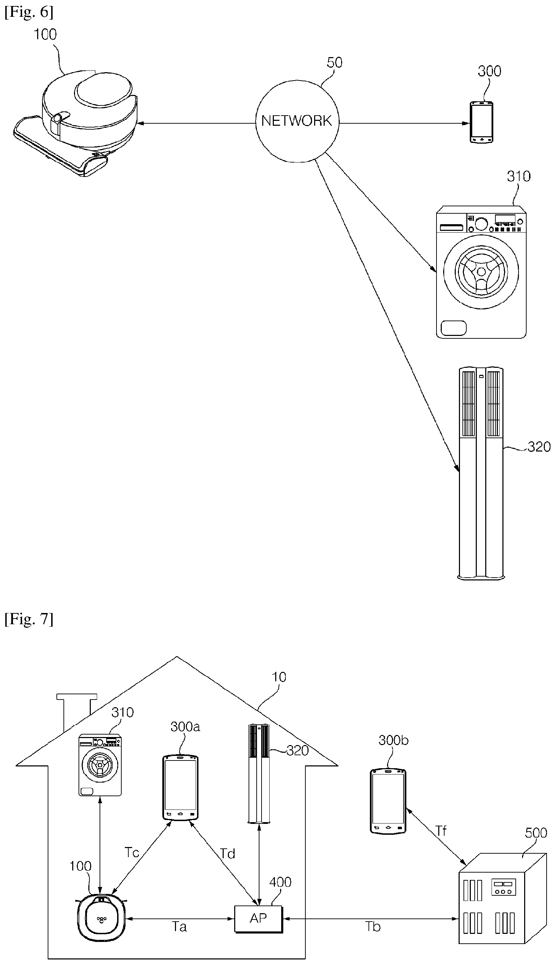

Referring to Ta in FIG. 7, the communicator 175 may communicate with the access point 400 in a wireless manner. Referring to Tc in FIG. 7, the communicator may communicate with a mobile terminal 300a in a wireless manner. Although not shown, the communicator 175 may directly communicate with the server 500 in a wireless manner. For example, the communicator 175 may be embodied to implement wireless communication through wireless communication technologies such as IEEE 802.11 WLAN, IEEE 802.15 WPAN, UWB, Wi-Fi, Zigbee, Z-wave, and Bluetooth. The communicator 175 may be varied in accordance with communication systems of other appliances to perform communication or a server.

The mobile robot 100 may receive information on a network through the communicator 175, and may be controlled based on the received information. For example, the communicator 175 may receive various information from the terminal 300. The communicator 175 may receive information input from the terminal 300 such as a smartphone or a computer.

Information of the mobile robot 100 may be transmitted to the network through the communicator 175. For example, the communicator 175 may transmit information which will be output to the terminal 300. The terminal 300 may output information received from the communicator 175.

Referring to FIG. 6, the mobile robot 100 may communicate with the terminal 300 via a predetermined network. The communicator 175 may communicate with the terminal 300 via the predetermined network. Here, the predetermined network means a communication network directly or indirectly connected in a wired and/or wireless manner. That is, the meaning of "the communicator 175 communicates with the terminal 300 via a predetermined network" includes both the case in which the communicator 175 and the terminal 300 directly communicate with each other and the case in which the communicator 175 and the terminal 300 indirectly communicate with each other via the access point 400 or the like.

The network may be constructed on the basis of technologies such as Wi-Fi, Ethernet, Zigbee, Z-wave, and Bluetooth.

The communicator 175 may transmit, via a predetermined network, information which will be output to the terminal 300. The terminal 300 may transmit various information (information as to setting of a disturbance prohibition mode, etc.) to the communicator 175 via the predetermined network.

The mobile robot 100 may be connected to a plurality of electronic appliances via the network or in a direct manner. Here, the plurality of electronic appliances may include at least one of home electronic appliances such as a washing machine 310, an air conditioner 320, a clothing treating machine, a door lock, a refrigerator, a dryer, and a purifier.

FIG. 7 is a concept diagram illustrating an example of a predetermined network. The mobile robot 100, the access point 400, the server 500, and mobile terminals 300a and 300b may be connected by networks and, as such, may perform transmission and reception of information. The mobile robot 100, the access point 400, the mobile terminal 300a and the like may be disposed in a building 10 such as a house. The server 500 may be embodied within the building 10. Of course, the server 500 may be embodied as a wider network outside of the building 10.

Each of the access point 400 and the server 500 may include a communication module connectable to the network in accordance with a predetermined protocol. The communicator 175 of the mobile robot 100 is connectable to the network in accordance with a predetermined protocol.

The mobile robot 100 may exchange data with the terminal 300 via the network. The communicator 175 may perform data exchange with the access point 400 in a wired or wireless manner and, as such, may perform data exchange with the terminal 300.

The mobile robot 100 may exchange data with the server 500 via the network. The communicator 175 may perform data exchange with the access point 400 in a wired or wireless manner and, as such, may perform data exchange with the server 500.

Referring to Ta in FIG. 7, the access point 400 may be connected to the mobile robot 100 in a wireless manner. Referring to Tb in FIG. 7, the access point 400 may be connected to the server 8 through wired or wireless communication. Referring to Td in FIG. 7, the access point 400 may be connected to the mobile terminal 300a in a wireless manner.

Meanwhile, the access point 400 may allocate radio channels to electronic appliances disposed within a predetermined area in accordance with a predetermined communication scheme and, as such, may perform wireless data communication with each electronic appliance through a corresponding one of the allocated radio channels. Here, the predetermine communication scheme may be a Wi-Fi communication scheme.

The access point 400 may communicate with the mobile robot 100 which is disposed in the predetermined area. The access point 400 may communicate with the mobile terminal 300a which is disposed in the predetermined area. The access point 400 may communicate with the server 500.

The server 500 may be configured to be connectable to the Internet. The server 500 may communicate with various terminals 300b connected to the Internet. An example of the terminals 300b may be a personal computer or a mobile terminal such as a smartphone.

Referring to Tb in FIG. 7, the server 500 may be connected to the access point 400 in a wired or wireless manner. Referring to Tf in FIG. 7, the server 500 may be directly connected to the mobile terminal 300b in a wireless manner. Although not shown, the server 500 may directly communicate with the mobile robot 100.

The server 500 includes a processor capable of processing a program. The function of the server 500 may be executed by a central computer (cloud). Otherwise, the function of the server 500 may be executed by a user computer or a mobile terminal.

For example, the server 500 may be a server managed by a manufacturer of the mobile robot 100. In another example, the server 500 may be a server managed by a publicly opened application store manager. In another example, the server 500 may be a home server which is disposed in a home to store state information as to home electronic appliances in the home or to store contents shared by the home electronic appliances.

The server 500 may store information as to the mobile robot 100 and driving information (course information), and may register production information as to the mobile robot 100.

Referring to Td in FIG. 7, the mobile terminal 300a may be connected to the access point 400 in a wireless manner through Wi-Fi or the like. Referring to Tc in FIG. 7, the mobile terminal 300a may be directly connected in a wireless manner through Bluetooth or the like. Referring to Tf in FIG. 7, the mobile terminal 300b may be directly connected to the server 500 in a wireless manner through a mobile communication service.

The terminal 300 may store information as to the mobile robot 100 and driving information (course information), and may register production information as to the mobile robot 100.

The network may further include a gateway (not shown). The gateway may intermediate communication between the mobile robot 100 and the access point 400. The gateway may communicate with the mobile robot 100 in a wireless manner. The gateway may communicate with the access point 400. For example, communication between the gateway and the access point 400 may be carried out on the basis of Ethernet or Wi-Fi.

Again referring to FIG. 5, the communication module 170 may receive information as to whether or not the disturbance prohibition mode is activated (ON or OFF). The communication module 170 may receive setting information of the disturbance prohibition mode. The communication module 170 may receive information as to a set time of the disturbance prohibition mode. The communication module 170 may receive information as to a specific function of the disturbance prohibition mode to be limited. The communication module 170 may receive information as to a mode function of the disturbance prohibition mode to be activated. The communication module 170 may receive information as to a set area of the disturbance prohibition mode.

In addition, the communication module 170 may receive information as to whether or not a specific function, which will be described later, is activated and various setting information of the specific function.

The mobile robot 100 includes a controller 140 configured to process and determine various information such as mapping and/or recognition of a current position. The controller 140 may control overall operation of the mobile robot 100 through control of various configurations constituting the mobile robot 100. The controller 140 may map a travel area based on an image, and may recognize a current position on a map. That is, the controller 140 may execute a simultaneous localization and mapping (SLAM) function.

The controller 140 may receive information from the communication module 170 and may process the received information. The controller 140 may receive information from the input unit 171 as an input thereof, and may process the received information. The controller 140 may receive information from the communicator 175 and may process the received information. The controller 140 may receive sensed information from the sensor 130 as an input thereof and may process the received information.

The controller 140 may send information to the communication module 170 for output of the information. The controller 140 may send information to the communicator 175. The controller 140 may control output of the output unit 173. The controller 140 may control driving of the driver 160. The controller 140 may control operation of the task executer 180.

The mobile robot 100 includes a storage 150 configured to store various information. The storage 150 records various information required for control of the mobile robot 100. The storage 150 may include a volatile or non-volatile recording medium.

The storage 150 may store setting information of the disturbance prohibition mode (for example, information as to a set time, information as to a specific function to be limited, information as to a mode function to be activated and/or information as to a set area) received from the communication module 170. The storage 150 may store setting information of a specific function received from the communication module 170.

The storage 150 may be stored with a reference illumination value, a reference difference value, a first illumination value, and second illumination value.

A map as to a travel area may be stored in the storage 150. The map may be input by an external terminal which can exchange information with the mobile robot 100 through the communicator 175. Otherwise, the map may be created by the mobile robot 100 through self-learning of the mobile robot 100. In the former case, examples of the terminal 300 may be a remote controller, a personal digital assistant (PDA), a laptop computer, a smartphone, a tablet computer, etc.

A travel area in reality may correspond to a travel area on a map. The travel area may be defined by a sum of all planar areas in which the mobile robot 100 had been experienced in travel and a planar area in which the mobile robot travels currently.

The controller 140 may identify a travel path of the mobile robot 100 based on operation of the driver 160. For example, the controller 140 may identify a current or past travel speed, a travel distance, etc. of the mobile robot 100 based on a rotation speed of the driving wheel 166. The controller 140 may also identify a current or past direction change procedure in accordance with rotation directions of the driving wheel 166(L) and 166(R). Based on travel information of the mobile robot 100 identified as described above, a position of the mobile robot 100 on the map may be updated. In addition, the position of the mobile robot 100 on the map may be updated using image information.

The user may change ON/OFF of the disturbance prohibition mode through the input unit 171, the terminal 300 or the like. The controller 140 may determine whether or not the disturbance prohibition mode is activated (ON or OFF), through the communication module 170.

The disturbance prohibition mode is a mode to limit generation of a prohibition factor, such as noise, to the user in a set time in accordance with a desire of the user. Even when a predetermined specific function is activated, the mobile robot 100 may perform control to limit the activated specific function in the set time in which the disturbance prohibition mode is activated. The specific function limited in the disturbance prohibition mode may be selected by the user. Here, the meaning of "limiting" may include complete prohibition of the specific function or partial prohibition of the specific function. In an example of partial prohibition of the specific function, the specific function may be controlled to be prohibited only in a portion (a set area) of the travel area.

When the controller 140 does not receive an input as to an ON state of the disturbance prohibition mode or setting of the disturbance prohibition mode from the user, the controller 140 may compare a first illumination value measured in an initial stage of a first task, a second illumination value measured after stopping the first task and then completing recharging, and a predetermined reference illumination value, and may then control the mobile robot 100 to subsequently execute the first task or not to subsequently execute the first task.

The controller 140 determines whether or not the first task should be subsequently executed, taking into consideration variation of a surrounding situation occurring between a time at which the user stops the first task and a time at which recharging performed due to power shortage of the battery 177 is completed. Accordingly, it may be possible to reduce a probability of disturbance of the mobile robot 100 to the user without particularly varying inputs or settings in accordance with a time or an environment varied from those of an initial stage of cleaning.

Here, the first illumination value means an illumination in a travel area measured in an initial stage of the first task. The illumination in the travel area may be an illumination around the mobile robot 100. The illumination in the travel area may be an average value of illumination values measured at various positions, or may include a plurality of illumination values measured at a specific point. Preferably, the first illumination value may be an illumination value measured around the recharging station 200 in an initial stage of the first task.

Here, the second illumination value means an illumination in a travel area measured after the first task is stopped due to power shortage of the battery 177 occurring during execution of the first task, and recharging is then completed. Preferably, the second illumination value may be an illumination value measured around the recharging station 200 at a time when recharging is completed.

In order to reduce an error generated during comparison between the first illumination value and the second illumination value, the point at which the first illumination value is measured and the point at which the second illumination value is measure are preferably the same.

As a method of measuring the first illumination value and the second illumination value by the mobile robot 100, various methods may be used. For example, the illumination sensor of the mobile robot 100 may measure an illumination around the mobile robot 100. In another example, the image sensor of the mobile robot 100 may measure an illumination around the mobile robot 100 by analyzing an input image.

Here, the first task may be a cleaning task or a patrol task for security.

The mobile robot 100 subsequently executing the first task means that the mobile robot 100 continuously executes the first task stopped due to power shortage of the battery 177. In detail, the controller 140 may control the mobile robot 100 to return to a position where the first task is stopped due to power shortage of the battery 177 and then to continuously execute the first task.

The mobile robot 100 not subsequently executing the first task means one of the mobile robot 100 standing by at a current position, the mobile robot 100 standing by while continuously performing recharging at the recharging station 200, and the mobile robot 100 watching surroundings at the current position without disturbing rest of the user.

When the second illumination value is greater than the reference illumination value, the controller 140 may control the mobile robot 100 to subsequently execute the first task. The case in which the second illumination value is greater than the reference illumination value is the daytime, the case in which a curtain is opened in the daytime, or the case in which indoor lighting is completely turned on at night. The reason why the controller 140 performs control as described above when the second illumination value is greater than the reference illumination value is because there is a high probability that the user is active in the travel area and, as such, the mobile robot 100 is allowed to again execute cleaning after recharging.

When the second illumination value is smaller than the reference illumination value, and the difference between the second illumination value and the first illumination value is greater than the predetermined reference difference value, the controller 140 may control the mobile robot 100 not to subsequently execute the first task.

Here, the difference between the second illumination value and the first illumination value may mean an absolute value of a value obtained by deducting the second illumination value from the first illumination value. The case in which the second illumination value is smaller than the reference illumination value is the case in which indoor lighting is completely turned off at night or the case in which a curtain is closed in the daytime. In such a case, there is a high possibility that the user rests such as sleeping.

In an embodiment, whether or not a task incompletely executed due to the battery 177 should be executed is determined, taking into consideration not only the reference illumination value, but also the difference between the second illumination value and the first illumination value. In the embodiment, accordingly, sleeping or rest of the user may not be disturbed even during recharging of the mobile robot 100.

The case in which the difference between the second illumination value and the first illumination value is the case in which the difference between the illumination value during execution of an initial task and the illumination value after completion of recharging is great. For example, in the case in which the user turns off lights for sleeping after a predetermined time elapses after execution of the initial task, the mobile robot 100 stands by without executing a task incompletely executed before recharging, even when recharging is completed during sleeping of the user.

When the second illumination value is smaller than the reference illumination value, and the difference between the second illumination value and the first illumination value is smaller than the predetermined reference difference value, the controller 140 may control the mobile robot 100 to subsequently execute the first task. This is because, when the second illumination value is smaller than the reference illumination value, and the difference between the illumination value during execution of an initial task and the illumination value at a time when recharging is completed is small, it is unnecessary to execute the disturbance prohibition mode because the user is active.

Of course, when the first task is not subsequently executed, the controller 140 may control the mobile robot 100 to return to the recharging station 200. In this case, it may be possible to prevent electric discharge of the mobile robot 100 in the disturbance prohibition mode and to execute the task at a time desired by the user.

In accordance with an embodiment, execution of an incompletely-executed task may be determined, taking into consideration whether or not there is a person in the travel area, as well as the reference illumination value and the reference difference value. Even under the condition that the disturbance prohibition mode should be executed in accordance with the illumination reference, the incompletely-executed task may be subsequently executed when there is no person in the travel area. When there is a person in the travel area under the condition that the disturbance prohibition mode should be executed in accordance with the illumination reference, the disturbance prohibition mode may be executed without execution of the incompletely-executed task.

In detail, when the second illumination value is smaller than the reference illumination value, the difference between the second illumination value and the first illumination value is greater than the predetermined reference difference value, and there is no person in the travel area, the controller 140 may control the mobile robot 100 to subsequently execute the first task.

In addition, when the second illumination value is smaller than the reference illumination value, the difference between the second illumination value and the first illumination value is greater than the predetermined reference difference value, and there is a person in the travel area, the controller 140 may control the mobile robot 100 not to subsequently execute the first task.

The controller 140 may determine whether or not there is a person in the travel area by analyzing an image of surroundings of the body. In addition, the controller 140 may determine whether or not there is a person in the travel area by analyzing information as to an operation state of an electronic appliance received through the communicator 175.

In detail, the controller 140 may control the mobile robot 100 to photograph the entirety of the travel area while patrolling the travel area, and may analyze an image of the travel area, thereby determining whether or not there is a person in the travel area.

In addition, the controller 140 may determine whether or not a position of the user is within the travel area, based on position information of a mobile terminal connected to the mobile robot 100. The controller 140 may also determine whether or not the user is present in the travel area, taking into consideration a use state of an electronic appliance (a washing machine, a styler, a dryer, or a refrigerator) connected to the mobile robot 100, and whether or not there is a user command input through an input unit of the electronic appliance.

The controller 140 determines whether or not the current time belongs to a predetermined time. In order to enable the controller 140 to recognize the current time, the mobile robot 100 may include a separate timer. Otherwise, the mobile robot 100 may receive information as to the current time through the communicator 175.

Under the condition that the disturbance prohibition mode is activated, the controller 140 performs control to limit at least one specific function when the current time belongs to the predetermined time, based on information as to the predetermined time received from the communication module 170.

At least one specific function to be limited corresponds to information as to a specific function to be limited, which is received from the communication module 170. The user selects at least one specific function to be limited from among a plurality of predetermined specific functions, through the input unit 171, the terminal 300 or the like.

In a state in which the disturbance prohibition mode is activated, the controller 140 performs control to prohibit at least one specific function only in a predetermined portion of the travel area, based on information as to the predetermined travel area portion received from the communication module 170, when the current time belongs to the set time.

In a state in which the disturbance prohibition mode is activated, the controller 140 performs control to activate (ON) at least one mode function, based on information as to the mode function to be activated received from the communication module 170, when the current time belongs to the set time. The at least one activated mode function corresponds to information as to a mode function to be activated. The user selects at least one mode function to be activated in the disturbance prohibition mode from among predetermined mode functions, through the input unit 171, the terminal 300 or the like.

When the current time does not belong to the set time, the controller 140 performs control to normally execute at least one selected specific function. When the current time does not belong to the set time, the controller 140 performs control to normally execute at least one selected specific function even in the predetermined travel area portion. When the current time does not belong to the set time, the controller 140 performs control to deactivate (OFF) at least one mode function which is activated (ON) in the disturbance prohibition mode.

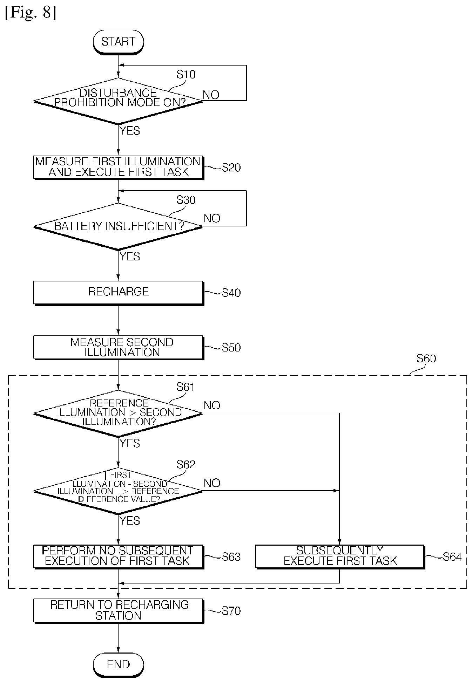

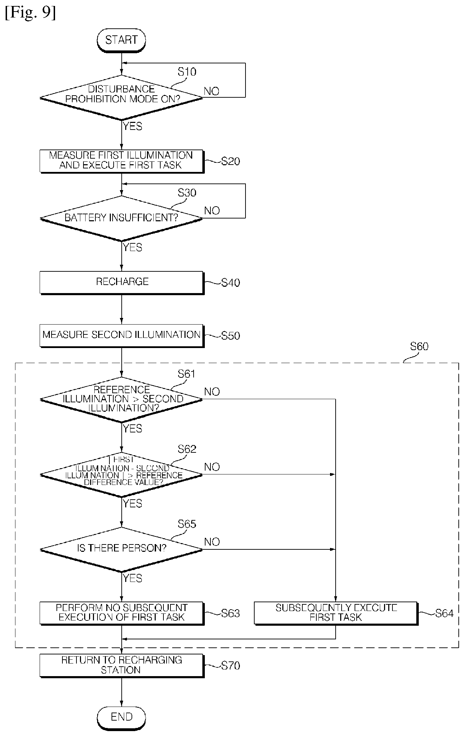

Hereinafter, control methods of the mobile robot 100 according to embodiments of the present disclosure will be described with reference to FIGS. 8 and 9. Overlapping contents in flowcharts are designated by the same reference numerals, and no description thereof will be given.

Each control method may be executed by the controller 140. The present disclosure may be a control method of the mobile robot 100, or may be the mobile robot 100 including the controller 140 to execute the control method. The present disclosure may be a computer program including each step of the control method, or may be a recording medium on which a program for implementing the control method using a computer is written. Here, "recording medium" means a recording medium that can be read by a computer. The present disclosure may be a control system of the mobile robot 100 including both hardware and software.

Each step in the flowcharts of the control methods and combinations of steps in the flowcharts may be implemented by computer program instructions. The computer program instructions may be loaded onto a general purpose computer, a special purpose computer, or the like. The instructions create means for implementing functions specified in each step (steps) of the flowcharts.

In addition, in some embodiments, the functions noted in the steps may occur out of order. For example, two steps shown in succession may in fact be executed substantially concurrently or the steps may sometimes be executed in reverse order, depending upon the functionality involved.

Referring to FIG. 8, the control method of the mobile robot includes a mode input step (not shown) for setting of a disturbance prohibition mode. In the mode input step, ON/OFF of the disturbance prohibition mode may be selected.

Of course, the control method of the mobile robot may further include a command input step (not shown) of receiving a task execution command. In the command input step, the user may command the mobile robot 100 to execute a first task.

The control method of the mobile robot 100 is executed only when the disturbance prohibition mode is in an ON state. The mobile robot 100 determines whether or not the disturbance prohibition mode is in an ON state (S10). Only when the disturbance prohibition mode is in an ON state, may the mobile robot 100 execute a subsequent step (hereinafter referred to as a "disturbance prohibition step").

The control method of the mobile robot 100 may include a first illumination value measurement step S20 of measuring a first illumination value of a travel area by the mobile robot 100, and executing the first task for the travel area by the mobile robot 100, a recharging step S30-S40 of executing recharging after stopping the first task for the travel area (S40) by the mobile robot 100 when a charged amount of the battery 177 is insufficient in a state in which the mobile robot 100 incompletely executes the first task (S30), a second lamination value measurement step S50 of measuring the second illumination value of the travel area by the mobile robot 100 after the mobile robot 100 completes recharging, and a task execution determination step S60 of comparing the second illumination value with a predetermined reference illumination value and the first illumination value by the mobile robot 100, thereby subsequently executing the first task by the mobile robot 100 or controlling the mobile robot 100 not to subsequently execute the first task.

In the first illumination value measurement step S20, the mobile robot 100 measures the first illumination value of the travel area, and executes a task (the first task) input in the command input step. In detail, when a first task command is input through the input unit, the controller 140 may analyze an image from the image sensor, thereby calculating the first illumination value. The controller 140 may then store the calculated first illumination value.

In the recharging step S30-S40, the mobile robot 100 checks a charged amount of the battery 177 during execution of the first task. When the charged amount of the battery 177 is not greater than a predetermined value in a state in which the mobile robot 100 incompletely executes the first task for the travel area (S30), the mobile robot 100 stops the first task, performs travel to return to the recharging station 200, and then performs recharging of the battery 177 at the recharging station 200 (S40).

In the second illumination value measurement step S50, the mobile robot 100 measures the second illumination value of the travel area after completing recharging. Of course, the mobile robot 100 may measure the second illumination value of the travel area, not only when the battery 177 is fully recharged, but also when a charged amount of the battery 177 is sufficient for execution of the first task. As described above, in the second illumination value measurement step S50, the controller 140 may calculate the second illumination value by analyzing an image of surroundings of the mobile robot 200, may calculate the second illumination value by analyzing an image of surroundings of the recharging station 200, or may calculate the second illumination value by analyzing an image of a point where the first illumination value is measured after moving to the point. Of course, the controller 140 may measure the second illumination value through the illumination sensor.

The task execution determination step S60 is a step of determining whether or not the first task should be subsequently executed after recharging.

In the task execution determination step S60, the mobile robot 100 compares the second illumination value with the predetermined reference illumination value (S61), and subsequently executes the first task when the second illumination value is greater than the reference illumination value (S64).

In the task execution determination step S60, the mobile robot 100 compares the second illumination value with the predetermined reference illumination value (S61). When the second illumination value is smaller than the reference illumination value, the mobile robot 100 compares a difference between the second illumination value and the first illumination value with a reference difference value (S62). When the difference between the second illumination value and the first illumination value is greater than the reference difference value, the mobile robot 100 does not subsequently execute the first task (S63).

In the task execution determination step S60, the mobile robot 100 subsequently executes the first task when the second illumination value is smaller than the reference illumination value, and the difference between the second illumination value and the first illumination value is smaller than the reference difference value (S64).

After completion of the task execution determination step S60, the mobile robot 100 returns to the recharging station (S70). In detail, when the mobile robot 100 does not subsequently execute the first task, the mobile robot 100 returns to the recharging station 200. After completion of the incompletely-executed first task, the mobile robot 100 may return to the recharging station 200.

Referring to FIG. 9, the control method of the mobile robot of FIG. 9 may further include a step of determining whether or not the incompletely-executed first task should be executed, by determining whether or not there is a person in the travel area, as compared to FIG. 8.

The control method of the mobile robot 100 may further include a determination step S20 of determining whether or not there is a person in the travel area. The task execution determination step S60 may further include the determination step S20.

In the determination step S20, the controller 140 may determine whether or not there is a person in the travel area by analyzing an image of surroundings of the mobile robot 100 or analyzing operations, states, and positions of other electronic appliances.

In detail, in the task execution determination step S60, the mobile robot 100 compares the second illumination value with the predetermined reference illumination value (S61), compares the difference between the second illumination value and the first illumination value with the reference difference value when the second illumination value is smaller than the reference illumination value (S62), determines whether or not there is a person in the travel area when the difference between the second illumination value and the first illumination value is greater than the reference difference value (S65), and does not subsequently execute the first task when there is a person in the travel area (S63).

In the task execution determination step S60, the mobile robot 100 subsequently executes the first task when the second illumination value is smaller than the reference illumination value, the difference between the second illumination value and the first illumination value is greater than the reference difference value, and there is no person in the travel area (S64).

### Mode for the Invention

Various embodiments have been described in the best mode for carrying out the disclosure.

### Industrial Applicability

The present disclosure has industrial applicability to mobile robots and control thereof.

Although the preferred embodiments of the present disclosure have been disclosed for illustrative purposes, those skilled in the art will appreciate that various modifications, additions and substitutions are possible, without departing from the scope and spirit of the disclosure as disclosed in the accompanying claims.

## Claims

1. A control method of a mobile robot comprising:
first illumination value measurement (S20) of, by the mobile robot, measuring a first illumination value in a travel area in which the mobile robot travels, and executing a first task for the travel area;
recharging (S30-S40) of, by the mobile robot, stopping the first task and performing recharging when a charged amount of a battery is insufficient in a state in which the mobile robot incompletely executes the first task for the travel area;
second illumination value measurement (S50) of, by the mobile robot, measuring a second illumination value in the travel area after the mobile robot completes recharging; and
task execution determination (S60) of, by the mobile robot, comparing the second illumination value with a predetermined reference illumination value and the first illumination value, thereby subsequently executing the first task or determining no subsequent execution of the first task,
wherein, in the task execution determination (S60), the mobile robot does not subsequently execute the first task when the second illumination value is smaller than the reference illumination value, and a difference between the second illumination value and the first illumination value is greater than a predetermined reference difference value.

2. The control method according to claim 1, wherein, in the task execution determination (S60), the mobile robot subsequently executes the first task when the second illumination value is greater than the reference illumination value.

3. The control method according to claim 1, wherein, in the task execution determination (S60), the mobile robot subsequently executes the first task when the second illumination value is smaller than the reference illumination value, and a difference between the second illumination value and the first illumination value is smaller than a predetermined reference difference value.

4. The control method according to claim 1, wherein, in the task execution determination (S60), the mobile robot returns to a recharging station when the mobile robot does not subsequently execute the first task.

5. The control method according to claim 1, wherein a point at which the first illumination value is measured and a point at which the second illumination value is measured are the same.

6. The control method according to claim 1, further comprising:
determination of determining whether or not there is a person in the travel area,
wherein, in the task execution determination (S60), the mobile robot subsequently executes the first task when the second illumination value is smaller than the reference illumination value, a difference between the second illumination value and the first illumination value is greater than a predetermined reference difference value, and there is no person in the travel area.

7. The control method according to claim 1, further comprising:
determination of determining whether or not there is a person in the travel area,
wherein, in the task execution determination, the mobile robot does not subsequently execute the first task when the second illumination value is smaller than the reference illumination value, a difference between the second illumination value and the first illumination value is greater than a predetermined reference difference value, and there is a person in the travel area.

8. The control method according to claim 6 or 7, wherein,
in the determination, the mobile robot analyzes an image of surroundings of the mobile robot, thereby determining whether or not there is a person in the travel area.

9. The control method according to claim 6 or 7, wherein, in the determination, the mobile robot analyzes an operation state of an electronic appliance connected to the mobile robot in a wired or wireless communication manner, thereby determining whether or not there is a person in the travel area.

10. A mobile robot (100) comprising:
a driver (160) configured to move a body (110);
a task executer (180) configured to execute a predetermined task;
an image sensor (135) configured to acquire an image of surroundings of the body (110); and
a controller (140) configured to compare a first illumination value measured in an initial stage of a first task, a second illumination value measured after stopping the first task and then completing recharging, and a predetermined reference illumination value, thereby controlling the mobile robot (100) to subsequently execute the first task or not to subsequently execute the first task,
wherein the controller (140) is configured to control the mobile robot (100) not to subsequently execute the first task when the second illumination value is smaller than the reference illumination value, and a difference between the second illumination value and the first illumination value is greater than a predetermined reference difference value.

11. The mobile robot (100) according to claim 10, wherein the controller (140) is configured to analyze the surrounding image of the body (110), thereby determining whether or not there is a person in a travel area, and controls the mobile robot (100) to subsequently execute the first task or not to subsequently execute the first task in accordance with whether or not there is a person in the travel area.

12. The mobile robot (100) according to claim 10, further comprising:
a communicator configured to communicate with an electronic appliance,
wherein the controller (140) is configured to analyze an operation state of the electronic appliance received through the communicator, thereby determining whether or not there is a person in a travel area, and controls the mobile robot (100) to subsequently execute the first task or not to subsequently execute the first task in accordance with whether or not there is a person in the travel area.

13. The mobile robot (100) according to claim 11 or 12, wherein the controller (140) is configured to control the mobile robot (100) not to subsequent execute the first task when the second illumination value is smaller than the first reference illumination value, a difference between the second illumination value and the first illumination value is greater than a predetermined reference difference value, and there is a person in the travel area.

## Patentansprüche

1. Steuerungsverfahren für einen mobilen Roboter, das aufweist:
eine erste Beleuchtungswertmessung (S20) durch den mobilen Roboter, des Messens eines ersten Beleuchtungswertes in einem Fahrbereich, in dem sich der mobile Roboter bewegt, und Ausführen einer ersten Aufgabe für den Fahrbereich;
Wiederaufladen (S30-S40) durch den mobilen Roboter, des Stoppens der ersten Aufgabe und Durchführens des Wiederaufladens, wenn eine Aufladungsbetrag einer Batterie in einem Zustand nicht ausreichend ist, in dem der mobile Roboter die erste Aufgabe für den Fahrbereich unvollständig ausführt;
eine zweite Beleuchtungswertmessung (S50) des Messens eines zweiten Beleuchtungswertes im Fahrbereich durch den mobilen Roboter, nachdem der mobile Roboter das Aufladen abgeschlossen hat; und
eine Aufgabenausführungsbestimmung (S60) durch den mobilen Roboter, des Vergleichens des zweiten Beleuchtungswerts mit einem vorbestimmten Referenzbeleuchtungswert und dem ersten Beleuchtungswert, dadurch anschließend des Aufführens der ersten Aufgabe oder des Bestimmens keiner Ausführung der ersten Aufgabe,
wobei bei der Aufgabenausführungsbestimmung (S60) der mobile Roboter die erste Aufgabe nicht anschließend ausführt, wenn der zweite Beleuchtungswert kleiner als der Referenzbeleuchtungswert ist und eine Differenz zwischen dem zweiten Beleuchtungswert und dem ersten Beleuchtungswert größer als ein vorbestimmter Referenzdifferenzwert ist.

2. Steuerungsverfahren nach Anspruch 1, wobei der mobile Roboter bei der Aufgabenausführungsbestimmung (S60) anschließend die erste Aufgabe ausführt, wenn der zweite Beleuchtungswert größer ist als der Referenzbeleuchtungswert.

3. Steuerungsverfahren nach Anspruch 1, wobei der mobile Roboter bei der Aufgabenausführungsbestimmung (S60) anschließend die erste Aufgabe ausführt, wenn der zweite Beleuchtungswert kleiner als der Referenzbeleuchtungswert ist und eine Differenz zwischen dem zweiten Beleuchtungswert und dem ersten Beleuchtungswert kleiner als ein vorbestimmter Referenzdifferenzwert ist.

4. Steuerungsverfahren nach Anspruch 1, wobei der mobile Roboter bei der Aufgabenausführungsbestimmung (S60) zu einer Aufladestation zurückkehrt, wenn der mobile Roboter anschließend nicht die erste Aufgabe ausführt.

5. Steuerungsverfahren nach Anspruch 1, wobei ein Punkt, an dem der erste Beleuchtungswert gemessen wird, und ein Punkt, an dem der zweite Beleuchtungswert gemessen wird, dieselben sind.

6. Steuerungsverfahren nach Anspruch 1, das ferner aufweist:
eine Bestimmung des Bestimmens, ob sich eine Person im Fahrbereich befindet oder nicht,
wobei bei der Aufgabenausführungsbestimmung (S60) der mobile Roboter anschließend die erste Aufgabe ausführt, wenn der zweite Beleuchtungswert kleiner als der Referenzbeleuchtungswert ist, eine Differenz zwischen dem zweiten Beleuchtungswert und dem ersten Beleuchtungswert größer als ein vorbestimmter Referenzdifferenzwert ist und sich keine Person in dem Fahrbereich befindet.

7. Steuerungsverfahren nach Anspruch 1, das ferner aufweist:
Bestimmen, ob sich eine Person im Fahrbereich befindet oder nicht,
wobei der mobile Roboter bei der Aufgabenausführungsbestimmung die erste Aufgabe nicht anschließend ausführt, wenn der zweite Beleuchtungswert kleiner als der Referenzbeleuchtungswert ist, eine Differenz zwischen dem zweiten Beleuchtungswert und dem ersten Beleuchtungswert größer als ein vorbestimmter Referenzdifferenzwert ist und sich eine Person in dem Fahrbereich befindet.

8. Steuerungsverfahren nach Anspruch 6 oder 7, wobei,
bei der Bestimmung der mobile Roboter ein Bild der Umgebung des mobilen Roboters analysiert, wodurch bestimmt wird, ob sich eine Person in dem Fahrbereich befindet oder nicht.

9. Steuerungsverfahren nach Anspruch 6 oder 7, wobei bei der Bestimmung der mobile Roboter einen Betriebszustand einer elektronischen Vorrichtung analysiert, die mit dem mobilen Roboter in einer verdrahteten oder drahtlosen Kommunikationsweise verbunden ist, wodurch bestimmt wird, ob sich eine Person in dem Fahrbereich befindet oder nicht.

10. Mobiler Roboter (100), der aufweist:
einen Antrieb (160), der konfiguriert ist, einen Körper (110) zu bewegen;
einen Aufgabenausführer (180), der konfiguriert ist, eine vorbestimmte Aufgabe auszuführen;
einen Bildsensor (135), der konfiguriert ist, ein Bild der Umgebung des Körpers (110) zu erfassen; und
eine Steuerung (140), die konfiguriert ist, einen ersten Beleuchtungswert, der in einer Anfangsphase einer ersten Aufgabe gemessen wird, einen zweiten Beleuchtungswert, der nach dem Stoppen der ersten Aufgabe und dem anschließenden Beenden des Aufladens gemessen wird, und einen vorbestimmten Referenzbeleuchtungswert zu vergleichen, wodurch der mobile Roboter (100) so gesteuert wird, dass er anschließend die erste Aufgabe ausführt oder die erste Aufgabe nicht ausführt,
wobei die Steuerung (140) konfiguriert ist, den mobilen Roboter (100) so zu steuern, dass er die erste Aufgabe nicht anschließend ausführt, wenn der zweite Beleuchtungswert kleiner als der Referenzbeleuchtungswert ist und eine Differenz zwischen dem zweiten Beleuchtungswert und dem ersten Beleuchtungswert größer als ein vorbestimmter Referenzdifferenzwert ist.

11. Mobiler Roboter (100) nach Anspruch 10, wobei die Steuerung (140) konfiguriert ist, das Umgebungsbild des Körpers (110) zu analysieren und dadurch zu bestimmen, ob sich eine Person in einem Fahrbereich befindet oder nicht, und den mobilen Roboter (100) so zu steuern, dass er anschließend die erste Aufgabe ausführt oder die erste Aufgabe nicht ausführt, je nachdem, ob sich eine Person in dem Fahrbereich befindet oder nicht.

12. Mobiler Roboter (100) nach Anspruch 10, der ferner aufweist:
eine Kommunikationsvorrichtung, die konfiguriert ist, mit einer elektronischen Vorrichtung zu kommunizieren,
wobei die Steuerung (140) konfiguriert ist, einen Betriebszustand der elektronischen Vorrichtung, die durch die Kommunikationsvorrichtung empfangen wird, zu analysieren, wodurch bestimmt wird, ob sich eine Person in einem Fahrbereich befindet oder nicht, und den mobilen Roboter (100) so zu steuern, dass er anschließend die erste Aufgabe ausführt oder die erste Aufgabe nicht ausführt, je nachdem, ob sich eine Person in dem Fahrbereich befindet oder nicht.

13. Mobiler Roboter (100) nach Anspruch 11 oder 12, wobei die Steuerung (140) konfiguriert ist, den mobilen Roboter (100) so zu steuern, dass er die erste Aufgabe nicht anschließend ausführt, wenn der zweite Beleuchtungswert kleiner als der erste Referenzbeleuchtungswert ist, eine Differenz zwischen dem zweiten Beleuchtungswert und dem ersten Beleuchtungswert größer als ein vorbestimmter Referenzdifferenzwert ist und sich eine Person in dem Fahrbereich befindet.

## Revendications

1. Procédé de commande d'un robot mobile, comprenant :
une première mesure de valeur d'éclairage (S20) consistant, de la part du robot mobile, à mesurer une première valeur d'éclairage dans une zone de déplacement du robot mobile, et à effectuer une première tâche pour la zone de déplacement ;
une recharge (S30-S40) par le robot mobile, arrêtant la première tâche, ladite recharge étant exécutée si une valeur de charge d'une batterie est insuffisante dans un état où le robot mobile effectue de manière incomplète la première tâche pour la zone de déplacement ;
une deuxième mesure de valeur d'éclairage (S50) consistant, de la part du robot mobile, à mesurer une deuxième valeur d'éclairage dans la zone de déplacement à l'issue de la recharge par le robot mobile ; et
une détermination d'exécution de tâche (S60) consistant, de la part du robot mobile, à comparer la deuxième valeur d'éclairage à une valeur d'éclairage de référence prédéterminée et à la première valeur d'éclairage, permettant ainsi d'effectuer consécutivement la première tâche ou de déterminer que la première tâche ne sera pas effectuée consécutivement,
où, lors de la détermination d'exécution de tâche (S60), le robot mobile n'effectue pas consécutivement la première tâche si la deuxième valeur d'éclairage est inférieure à la valeur d'éclairage de référence et si une différence entre la deuxième valeur d'éclairage et la première valeur d'éclairage est supérieure à une valeur différentielle de référence prédéterminée.

2. Procédé de commande selon la revendication 1, où, lors de la détermination d'exécution de tâche (S60), le robot mobile effectue consécutivement la première tâche si la deuxième valeur d'éclairage est supérieure à la valeur d'éclairage de référence.

3. Procédé de commande selon la revendication 1, où, lors de la détermination d'exécution de tâche (S60), le robot mobile effectue consécutivement la première tâche si la deuxième valeur d'éclairage est inférieure à la valeur d'éclairage de référence, et si une différence entre la deuxième valeur d'éclairage et la première valeur d'éclairage est inférieure à valeur différentielle de référence prédéterminée.

4. Procédé de commande selon la revendication 1, où, lors de la détermination d'exécution de tâche (S60), le robot mobile retourne vers une station de recharge si le robot mobile n'effectue pas consécutivement la première tâche.

5. Procédé de commande selon la revendication 1, où un point auquel la première valeur d'éclairage est mesurée et un point auquel la deuxième valeur d'éclairage est mesurée sont identiques.

6. Procédé de commande selon la revendication 1, comprenant en outre :
une détermination si une personne est présente ou non dans la zone de déplacement,
où, lors de la détermination d'exécution de tâche (S60), le robot mobile effectue consécutivement la première tâche si la deuxième valeur d'éclairage est inférieure à la valeur d'éclairage de référence, si une différence entre la deuxième valeur d'éclairage et la première valeur d'éclairage est supérieure à une valeur différentielle de référence prédéterminée et si aucune personne n'est présente dans la zone de déplacement.

7. Procédé de commande selon la revendication 1, comprenant en outre :
une détermination si une personne est présente ou non dans la zone de déplacement, où, lors de la détermination d'exécution de tâche, le robot mobile n'effectue pas consécutivement la première tâche si la deuxième valeur d'éclairage est inférieure à la valeur d'éclairage de référence, si une différence entre la deuxième valeur d'éclairage et la première valeur d'éclairage est supérieure à une valeur différentielle de référence prédéterminée et si une personne est présente dans la zone de déplacement.

8. Procédé de commande selon la revendication 6 ou la revendication 7, où,
lors de la détermination, le robot mobile analyse une image de l'environnement du robot mobile, déterminant ainsi si une personne est présente ou non dans la zone de déplacement.

9. Procédé de commande selon la revendication 6 ou la revendication 7, où, lors de la détermination, le robot mobile analyse un état de fonctionnement d'un appareil électronique connecté au robot mobile de manière filaire ou sans fil, déterminant ainsi si une personne est présente ou non dans la zone de déplacement.

10. Robot mobile (100), comprenant :
un entraînement (160) prévu pour déplacer un corps (110) ;
un exécuteur de tâches (180) prévu pour effectuer une tâche prédéterminée ;
un capteur d'image (135) prévu pour acquérir une image de l'environnement du corps (110) ; et
un contrôleur (140) prévu pour comparer une première valeur d'éclairage mesurée lors d'une phase initiale d'une première tâche, une deuxième valeur d'éclairage mesurée après l'arrêt de la première tâche et l'exécution d'une recharge, et une valeur d'éclairage de référence prédéterminée, commandant ainsi l'exécution ou la non-exécution consécutive de la première tâche par le robot mobile (100),
où le contrôleur (140) est prévu pour commander le robot mobile (100) afin qu'il n'effectue pas consécutivement la première tâche si la deuxième valeur d'éclairage est inférieure à la valeur d'éclairage de référence et si une différence entre la deuxième valeur d'éclairage et la première valeur d'éclairage est supérieure à une valeur différentielle de référence prédéterminée.

11. Robot mobile (100) selon la revendication 10, où le contrôleur (140) est prévu pour analyser l'image de l'environnement du corps (110), déterminant ainsi si une personne est présente ou non dans la zone de déplacement, et commande le robot mobile (100) afin qu'il effectue consécutivement ou non la première tâche en fonction de la présence ou non d'une personne dans la zone de déplacement.

12. Robot mobile (100) selon la revendication 10, comprenant en outre :
un dispositif de communication prévu pour communiquer avec un appareil électronique, où le contrôleur (140) est prévu pour analyser un état de fonctionnement de l'appareil électronique reçu via le dispositif de communication, déterminant ainsi si une personne est présente ou non dans la zone de déplacement, et commander le robot mobile (100) afin qu'il effectue consécutivement ou non la première tâche en fonction de la présence ou non d'une personne dans la zone de déplacement.

13. Robot mobile (100) selon la revendication 11 ou la revendication 12, où le contrôleur (140) est prévu pour commander le robot mobile (100) afin qu'il n'effectue pas consécutivement la première tâche si la deuxième valeur d'éclairage est inférieure à la première valeur d'éclairage de référence, si une différence entre la deuxième valeur d'éclairage et la première valeur d'éclairage est supérieure à une valeur différentielle de référence prédéterminée, et si une personne est présente dans la zone de déplacement.
